# EUROPÄISCHE PATENTSCHRIFT

(11) **EP 3 669 099 B1**
(45) Veröffentlichungstag und Bekanntmachung des Hinweises auf die Patenterteilung: **19.05.2021**
(21) Anmeldenummer: 18752114.1
(22) Anmeldetag: 31.07.2018
(51) Int. Cl.: F16H 3/54, F16H 3/10, F16H 37/04

(54) **GETRIEBEANORDNUNG**
GEARBOX ARRANGEMENT
DISPOSITIF DE TRANSMISSION

(30) Priorität: 14.08.2017 DE 102017214160
(43) Veröffentlichungstag der Anmeldung: 24.06.2020
(73) Patentinhaber: Robert Bosch GmbH, 70442 Stuttgart (DE)
(72) Erfinder: MOHAMED, Wael, 71282 Hemmingen (DE)
(86) Internationale Anmeldenummer: PCT/EP2018/070772
(87) Internationale Veröffentlichungsnummer: WO 2019/034415

(56) Entgegenhaltungen:
- DE-A1-102014 116 412
- JP-A- H06 337 049
- JP-A- 2011 038 585

## Beschreibung

### Stand der Technik

Die vorliegende Erfindung betrifft eine Getriebeanordnung. Außerdem betrifft die Erfindung ein Antriebssystem, umfassend eine derartige Getriebeanordnung.

Aus dem Stand der Technik ist, insbesondere im Fahrzeugbereich, eine Vielzahl von unterschiedlichen Getriebeanordnungen bekannt. Dabei weisen bekannte Getriebeanordnungen den Nachteil auf, dass diese nicht unter Last schaltbar sind. Vielmehr ist hierzu ein aufwendiges Verfahren notwendig, um einen Antriebsstrang zu unterbrechen, damit für einen Gangwechselvorgang der Getriebeanordnung sichergestellt ist, dass keinerlei Last an der Getriebeanordnung anliegt. Aus der DE 10 2014 116 412 A1 ist eine Getriebeanordnung mit einem Planetengetriebe zwischen einem Eingang und einem Ausgang der Getriebeanordnung bekannt, wobei ein Hohlrad des Planetengetriebes mit dem Ausgang gekoppelt ist und ein Planetenträger mit dem Eingang koppelbar ist, wobei die Getriebeanordnung einen ersten Freilauf umfasst.

### Offenbarung der Erfindung

Durch die erfindungsgemäße Getriebeanordnung ist eine Schaltbarkeit unter Last sichergestellt. Gleichzeitig kann durch die Getriebeanordnung auch ein Drehmoment von dem Ausgang zu dem Eingang übertragen werden, um eine Rekuperation durchzuführen. Die Rekuperation ist insbesondere dann vorteilhaft, wenn an dem Eingang der Getriebeanordnung eine E-Maschine angeordnet ist.

Die erfindungsgemäße Getriebeanordnung umfasst ein Planetengetriebe, das zwischen einem Eingang und einem Ausgang der Getriebeanordnung angeordnet ist. Dabei ist vorgesehen, dass ein Hohlrad des Planetengetriebes mit dem Ausgang gekoppelt ist, während ein Sonnenrad und ein Planetenträger des Planetengetriebes wahlweise mit dem Eingang koppelbar sind. Durch eine unterschiedliche Wahl der Kopplung mit dem Eingang, das bedeutet durch entweder Koppeln des Sonnenrads mit dem Eingang oder durch Koppeln des Planetenträgers mit dem Eingang, ist insbesondere eine unterschiedliche Übersetzung der Getriebeanordnung realisiert. Dies bedeutet, dass ein Gangwechsel durch Wechsel der Kopplung von Sonnenrad oder Planetenträger mit dem Eingang realisierbar ist. Die Getriebeanordnung umfasst einen ersten Freilauf und einen zweiten Freilauf. Dabei ist vorgesehen, dass der erste Freilauf zwischen Eingang und Planetenträger vorgesehen ist, während der zweite Freilauf zwischen Sonnenrad und Hohlrad angeordnet ist. Durch den ersten Freilauf ist somit ermöglicht, wahlweise den Planetenträger mit dem Eingang zu verbinden. Durch den zweiten Freilauf sind wahlweise Sonnenrad und Hohlrad miteinander verbindbar, wodurch das Planetengetriebe als Ganzes rotiert und keinerlei Übersetzung darstellt. Es ist somit ersichtlich, dass durch wahlweises Blockieren des ersten Freilaufs oder zweiten Freilaufs ein unterschiedliches Übersetzungsverhältnis realisiert werden kann. Da ein Blockieren des ersten Freilaufs und des zweiten Freilaufs immer dann erfolgt, wenn ein entsprechendes Drehmoment an dem Freilauf anliegt, ist somit kein aktives Eingreifen in die Kraftübertragung zwischen Eingang und Planetenträger sowie zwischen Sonnenrad und Hohlrad erforderlich. Vielmehr ist lediglich bevorzugt über einen einzigen Aktuator zu steuern, ob der Eingang mit dem Sonnenrad oder mit dem Planetenträger gekoppelt werden soll.

Erfindungsgemäß ist das Sonnenrad über eine Kupplung und/oder einen dritten Freilauf mit einem Getriebegehäuse der Getriebeanordnung drehfest verbindbar. Somit kann sich das Sonnenrad gegenüber dem Getriebegehäuse abstützen. Dies ist insbesondere dann vorteilhaft, wenn eine Kraftübertragung von dem Eingang zu dem Planetenträger erfolgt. Da in diesem Fall das Hohlrad als Abtrieb fungiert, ist das Sonnenrad gegenüber dem Getriebegehäuse festzustellen. Dies wird erfindugsgemäß durch den dritten Freilauf erreicht. Alternativ kann eine Kupplung vorhanden sein, die aktiv gesteuert werden kann.

Die Unteransprüche haben bevorzugte Weiterbildungen der Erfindung zum Inhalt.

Bevorzugt weist die Getriebeanordnung eine erste Klaue und/oder eine zweite Klaue auf. Die erste Klaue wirkt parallel zu dem ersten Freilauf, um den Eingang und den Planetenträger drehfest zu verbinden. Die zweite Klause wirkt parallel zu dem zweiten Freilauf, um das Sonnenrad und das Hohlrad drehfest zu verbinden. Durch die Verwendung von erstem Freilauf und zweitem Freilauf ist zwar eine Kraftübertragung von dem Eingang zu dem Ausgang der Getriebeanordnung ermöglicht, nicht jedoch eine Kraftübertragung von dem Ausgang zu dem Eingang der Getriebeanordnung, da in diesem Fall der erste Freilauf und/oder der zweite Freilauf von einem blockierenden Zustand in einen überholenden Zustand übergeht. Auf diese Weise wäre ein Rekuperieren mit der Getriebeanordnung nicht möglich. Daher wird durch das Bereitstellen der ersten Klaue und der zweite Klaue ein Rekuperationsbetrieb mit der Getriebeanordnung ermöglicht, bei der durch Kraftübertragung von dem Ausgang zu dem Eingang insbesondere eine E-Maschine rotiert wird, um somit als Generator zu wirken. Soll eine Rekuperation eingesetzt werden, so sind die erste Klaue und/oder die zweite Klaue zu schließen, um eine Kraftübertragung zwischen Eingang und Planetenträger oder zwischen Hohlrad und Sonnenrad in allen Richtungen zu ermöglichen.

Der Planetenträger weist bevorzugt eine Vielzahl von ersten Planetenrädern und zweiten Planetenrädern auf. Dabei ist vorgesehen, dass die ersten Planetenräder im Eingriff mit dem Sonnenrad und die zweiten Planetenräder im Eingriff mit dem Hohlrad stehen. Ebenso steht jeweils ein erstes Planetenrad im Eingriff mit einem zweiten Planetenrad. Auf dieses Weise wird ein Plus-Planetensatz gebildet, der eine größere Übersetzung aufweist, als ein herkömmlicher Planetensatz, bei dem lediglich ein Satz von Planetenrädern vorhanden ist, die sowohl in dem Sonnenrad als auch in dem Hohlrad kämmen. Die ersten Planetenräder und zweiten Planetenräder weisen vorteilhafterweise denselben Durchmesser und/oder eine selbe Zähnezahl auf, wobei ein Durchmesser und/oder eine Zähnezahl von ersten Planetenrädern und zweiten Planetenrädern auch unterschiedlich sein können.

Die Getriebeanordnung umfasst vorteilhafterweise eine Eingangswelle. Die Eingangswelle ist mit dem Eingang und dem Planetenträger gekoppelt. Gleichzeitig ist die Eingangswelle wahlweise mit dem Sonnenrad koppelbar. Insbesondere ist somit die Eingangswelle über den ersten Freilauf mit dem Planetenträger gekoppelt. Dies bedeutet, dass eine Kraftübertragung zwischen Eingangswelle und Planetenträger erfolgen kann. Durch das wahlweise Verbinden von Sonnenrad und Eingangswelle wird der erste Freilauf entweder in den überholenden Zustand oder in den blockierenden Zustand überführt. Dadurch ist ein Gangwechsel der Getriebeanordnung ermöglicht. Gleiches gilt für den zweiten Freilauf. Dabei ist vorgesehen, dass entweder der erste Freilauf oder zweite Freilauf in einem blockierenden Zustand vorhanden ist. Dies bedeutet, dass in dem Fall, in dem der erste Freilauf blockiert, der zweite Freilauf überholt wird, während der zweiten Freilauf blockiert, während der erste Freilauf überholt wird. All diese Zustände lassen sich lediglich dadurch erreichen, dass wahlweise das Sonnenrad mit der Eingangswelle gekoppelt wird.

Besonders vorteilhaft ist eine erste Stirnradstufe vorgesehen, die zum Koppeln der Eingangswelle mit dem Planetenträger vorgesehen ist. Diese erste Stirnradstufe ist somit über besagten ersten Freilauf mit dem Planetenträger gekoppelt. Eine zweite Stirnradstufe ist zum Koppeln von Eingangswelle und Sonnenrad vorgesehen. Dabei sind eine Drehmomentübertragung und/oder eine Drehzahlübertragung über die zweite Stirnradstufe wahlweise aktivierbar oder deaktivierbar. Durch besagte Aktivierbar und Deaktivierbarkeit ist somit das zuvor beschriebene wahlweise verbinden von Eingangswelle und Sonnenrad ermöglicht. Je nach dem, ob eine Drehmomentübertragung und/oder Drehzahlübertragung über die zweite Stirnradstufe erfolgt, befinden sich erster Freilauf und zweiter Freilauf in einem blockierenden oder freigebenden Zustand. Insbesondere ist vorgesehen, dass erster Freilauf und zweiter Freilauf nicht gleichzeitig einen blockierenden oder freigebenden Zustand einnehmen können.

Besonders vorteilhaft ist zwischen der Eingangswelle und der zweiten Stirnradstufe und/oder zwischen der zweiten Stirnradstufe und dem Sonnenrad eine Kupplung, insbesondere eine Lamellenkupplung angeordnet. Somit kann das zuvor beschriebene, wahlweise Aktivieren und Deaktivieren der Drehmomentübertragung und/oder Drehzahlübertragung über die zweite Stirnradstufe realisiert werden. Ist die Kupplung geschlossen, so erfolgt ein Verbinden von Eingangswelle und Sonnenrad. Ist hingegen die Kupplung geöffnet, so ist keinerlei Verbindung zwischen Eingangswelle und Sonnenrad vorhanden. Je nach dem, ob die Kupplung geöffnet oder geschlossen ist, erfolgt somit entweder ein Übertragen von Drehzahl und/oder Drehmoment von der Eingangswelle an den Planetenträger oder an das Sonnenrad. Wird eine Drehmomentübertragung und/oder Drehzahlübertragung bei geöffneter Kupplung an den Planetenträger durchgeführt, so ist vorgesehen, dass erste Freilauf blockiert. Somit erfolgt eine Kraftübertragung von der Eingangswelle auf die Planetenräder des Planetengetriebes. Gleichzeitig ist vorgesehen, dass, entweder über den zuvor beschriebenen dritten Freilauf oder über die zuvor beschriebene Kupplung, das Sonnenrad mit dem Getriebegehäuse drehfest gekoppelt ist. Somit kann eine Ausgabe eines gewandelten Drehmoments über das Hohlrad erfolgen. Das Hohlrad ist mit dem Ausgang gekoppelt, so dass ein gewandeltes Drehmoment aus der Getriebeanordnung ausgebbar ist. Ist hingegen die Kupplung geschlossen, so überholt der erste Freilauf und eine Kraftübertragung zwischen Eingangswelle und Planetenträger findet nicht statt. Vielmehr findet in diesem Fall eine Kraftübertragung zwischen Eingangswelle und Sonnenrad statt. In diesem Fall ist das Sonnenrad nicht drehfest mit dem Getriebegehäuse verbunden. Allerdings greift der zweite Freilauf, wodurch Sonnenrad und Hohlrad gekoppelt sind. Dies führt zu einer Rotation des Planetengetriebes als Ganzes, wodurch eine Übersetzung des Planetengetriebes nicht mehr wirkt. Dadurch weist die Getriebeanordnung eine geringere Übersetzung auf, so dass an dem Ausgang ein entsprechend gewandeltes Drehmoment ausgegeben wird. Da ein Gangwechsel lediglich durch Betätigen der Kupplung erfolgt, kann der Gangwechsel vorteilhafterweise unter Last durchgeführt werden. Es sind somit keine zusätzlichen Maßnahmen notwendig, um die Getriebeanordnung von einem Antriebsstrang, beispielsweise eines Fahrzeugs zu trennen, um einen Gangwechsel durchzuführen. Vielmehr kann der Gangwechsel jederzeit und insbesondere im Betrieb, d.h., unter Last, durchgeführt werden.

Bevorzugt weist die Getriebeanordnung ein Ausgangsrad auf, das mit einem Ritzel kämmt. Das Ritzel ist mit dem Hohlrad des Planetengetriebes drehfest verbunden. Das Ausgangsrad stellt den Ausgang der Getriebeanordnung dar. Insbesondere ist das Ausgangsrad drehfest mit einem anzutreibenden Element verbindbar.

Die Erfindung betrifft außerdem eine Antriebsvorrichtung eines Fahrzeugs, umfassend eine E-Maschine und eine Getriebeanordnung wie zuvor beschrieben. Dabei ist vorgesehen, dass die E-Maschine mit dem Eingang gekoppelt ist. Somit ist die Antriebsvorrichtung eine elektrische Antriebsvorrichtung, die vorteilhafterweise Zugkraftunterbrechungsfrei operieren kann. Die Zugkraftunterbrechungsfreiheit wird dadurch erreicht, dass die Getriebeanordnung unter Last schaltbar ist. Somit sind keinerlei Maßnahmen erforderlich, die die Getriebeanordnung von der E-Maschine trennen, wodurch eine Zugkraftunterbrechung entstehen würde.

Die Antriebsvorrichtung weist vorteilhafterweise ein Differentialgetriebe auf. Das Differentialgetriebe ist drehfest mit dem zuvor beschriebenen Ausgangsrad verbunden. Dies bedeutet, dass das Differentialgetriebe mit dem Ausgang der Getriebeanordnung gekoppelt ist. Das Differentialgetriebe ist insbesondere mit Antriebsrädern des Fahrzeugs verbunden. Somit kann ein Antrieb des Fahrzeugs über die Antriebsvorrichtung erfolgen, indem eine Antriebskraft von der E-Maschine durch die Getriebeanordnung gewandelt wird und über das Differentialgetriebe an die Antriebsräder ausgegeben wird. Wie zuvor bereits beschrieben, kann ein solcher Antrieb Zugkraftunterbrechungsfrei sein, da durch die Getriebeanordnung ein Wechseln eines Gangs unter Last ermöglicht ist.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine schematische Darstellung einer Antriebsvorrichtung mit einer Getriebeanordnung gemäß einem ersten Ausführungsbeispiel der Erfindung,
- Figur 2: eine schematische Darstellung eines Planetengetriebes der Getriebeanordnung gemäß dem ersten Ausführungsbeispiel der Erfindung,
- Figur 3: eine schematische Darstellung einer Antriebsvorrichtung mit einer Getriebeanordnung gemäß einem zweiten Ausführungsbeispiel der Erfindung, und
- Figur 4: eine schematische Darstellung eines alternativen Planetengetriebes der Getriebeanordnung gemäß dem ersten Ausführungsbeispiel oder zweiten Ausführungsbeispiel.

### Ausführungsformen der Erfindung

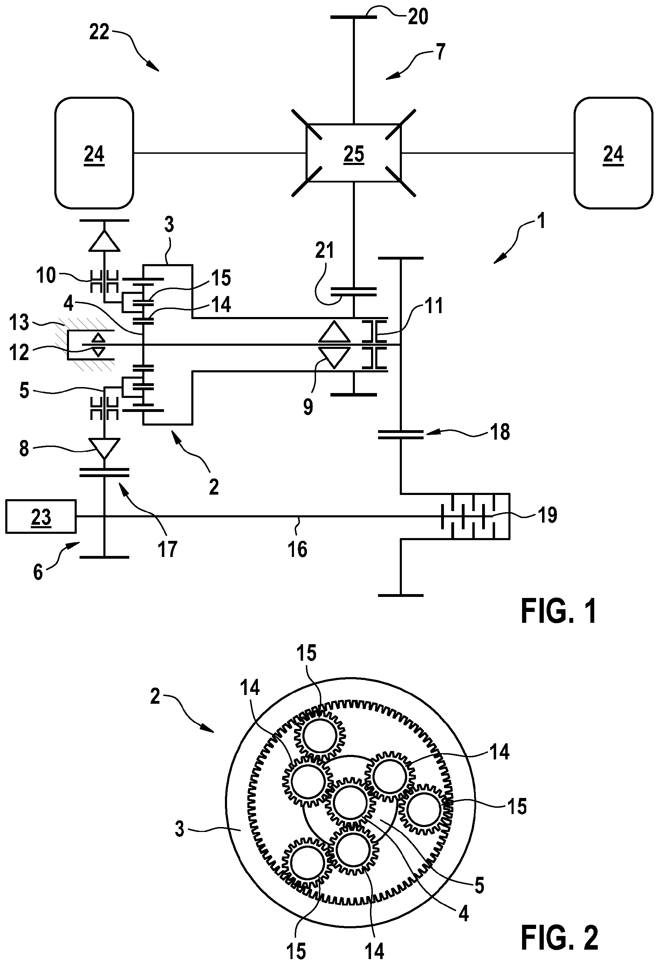

Figur 1 zeigt schematisch eine Antriebsvorrichtung 22 eines Fahrzeugs. Die Antriebsvorrichtung 22 umfasst eine E-Maschine 23, die mit einem Eingang 6 einer Getriebeanordnung 1 gekoppelt ist. Weiterhin umfasst die Antriebsvorrichtung ein Differentialgetriebe 25, das mit einem Ausgang 7 der Getriebeanordnung 1 gekoppelt ist. Über das Differentialgetriebe 25 sind Antriebsräder 24 der Antriebsvorrichtung 22 antreibbar. Dies bedeutet, dass über die E-Maschine ein Drehmoment generierbar ist, das von der Getriebeanordnung 1 wandelbar ist, so dass das gewandelte Drehmoment über das Differentialgetriebe 25 auf die Antriebsräder 24 aufbringbar ist.

Die Getriebeanordnung 1 umfasst ein Planetengetriebe 2 und ist insbesondere unter Last schaltbar. Dies ermöglicht ein zugkraftunterbrechungsfreies Betreiben der Antriebsvorrichtung 22, wodurch an den Antriebsrädern 24 stets ein Drehmoment anliegt. Das Wechseln eines Gangs der Getriebeanordnung 1 ist somit einfach und aufwandsarm ermöglicht, da dies im laufenden Betrieb der Antriebsvorrichtung 22 erfolgen kann.

Die Getriebeanordnung 1 umfasst eine Eingangswelle 16. Die Eingangswelle 16 ist über eine erste Stirnradstufe 17 oder eine zweite Stirnradstufe 18 mit dem Planetengetriebe 2 verbindbar. Dabei ist vorgesehen, dass über die erste Stirnradstufe 17 eine Verbindung der Eingangswelle 16 mit einem Planetenträger 5 des Planetengetriebes 2 erfolgt, während über die zweite Stirnradstufe 18 eine Verbindung der Eingangswelle 16 mit einem Sonnenrad 4 des Planetengetriebes 2 erfolgt. Zwischen der ersten Stirnradstufe 17 und dem Planetenträger 5 ist ein erster Freilauf 8 angeordnet. Des Weiteren ist ein zweiter Freilauf 9 zwischen dem Sonnenrad 4 und einem Hohlrad 3 des Planetengetriebes 2 angeordnet. Über das Hohlrad 3 erfolgt ein Abtrieb von dem Planetengetriebe 2.

Zwischen der Eingangswelle 16 und der zweiten Stirnradstufe 18 ist eine Kupplung 19 angeordnet. Somit kann eine Drehmomentübertragung und/oder Drehzahlübertragung von der Eingangswelle 16 auf die zweite Stirnradstufe 18 wahlweise erfolgen. Soll eine solche Übertragung erfolgen, so wird die Kupplung 19 geschlossen. Soll eine solche Übertragung nicht erfolgen, so wird die Kupplung 19 geöffnet.

Ist die Kupplung 19 geöffnet, so greift der erste Freilauf 8. Dies führt dazu, dass eine Kraftübertragung von der Eingangswelle 16 auf den Planetenträger 5 erfolgt. Der Planetenträger 5 wird somit durch die E-Maschine 23 angetrieben. Gleichzeitig greift ein dritter Freilauf 12, der das Sonnenrad 4 gegenüber einem Getriebegehäuse 13 feststellt. Das Sonnenrad 4 ist somit drehfest mit dem Getriebegehäuse 13 verbunden, wodurch ein Rotieren des Sonnenrads 4 nicht möglich ist. Dies führt zu einer Übersetzung des Planetengetriebes 2, wobei ein über den Planetenträger 5 eingebrachtes Drehmoment gewandelt und über das Hohlrad 3 ausgegeben wird.

Das Hohlrad 3 ist drehfest mit einem Ritzel 21 verbunden, dass mit einem Ausgangsrad 20 kämmt. Das Ausgangsrad 20 stellt den Ausgang 7 der Getriebeanordnung 1 dar. Das Ausgangsrad 20 ist vorteilhafterweise mit zumindest einer Komponente des zuvor beschriebenen Differentialgetriebes 25 drehfest verbunden.

Dies bedeutet somit, dass bei geöffneter Kupplung 19, eine Drehmomentübertragung durch die Übersetzung des Planetengetriebes 2 erfolgt. Dadurch ist eine hohe Übersetzung realisiert.

Wird die Kupplung 19 geschlossen, so erfolgt eine Kraftübertragung von der Eingangswelle 16 über die zweite Stirnradstufe 18 auf das Sonnenrad 4 des Planetengetriebes 2. In diesem Fall wird der dritte Freilauf 12 überholt, so dass das Sonnenrad 4 gegenüber dem Getriebegehäuse 13 frei rotieren kann. Gleichzeitig greift der zweite Freilauf 9, wodurch Hohlrad 3 und Sonnenrad 4 miteinander gekoppelt sind. Dies bedeutet, dass das Hohlrad 3 und das Sonnenrad 4 gleichzeitig rotieren, wodurch der erste Freilauf 8 überholt wird. Somit rotiert das Planetengetriebe 2 als Ganzes und kann dadurch keinerlei Übersetzungsverhältnis bereitstellen. Das einzig wirksame Übersetzungsverhältnis wird daher durch die zweite Stirnradstufe 18 sowie durch das Ritzel 21 und das Ausgangsrad 20 erreicht. Somit ist ein niedriges Übersetzungsverhältnis vergleichen mit dem Zustand der geöffneten Kupplung 19 erreicht. Durch Öffnen und Schließen der Kupplung 19 ist somit zwischen zwei Gängen der Getriebeanordnung 1 wechselbar.

Ein Gangwechsel wird dadurch initiiert, dass die Kupplung 19 geöffnet oder geschlossen wird. Durch den ersten Freilauf 8, den zweiten Freilauf 9 und den dritten Freilauf 12 ist sichergestellt, dass keine weiteren aktiven Eingriffe erforderlich sind. Vielmehr wird ein Drehmomentpfad durch die Getriebeanordnung 1 selbstständig erreicht, sobald die Kupplung 19 geöffnet oder geschlossen ist. Somit ist eine Drehmomentübertragung von der E-Maschine 23 zu den Antriebsrädern 24, das bedeutet eine Drehmomentübertragung von dem Eingang 6 zu dem Ausgang 7 der Getriebeanordnung 1 ermöglicht.

Durch die Verwendung des ersten Freilaufs 8, des zweiten Freilaufs 9 und des dritten Freilaufs 12 ist jedoch keinerlei Drehmomentübertragung von den Antriebsrädern 24 zu der E-Maschine 23, d.h., von dem Ausgang 7 zu dem Eingang 6 der Getriebeanordnung 1 möglich. Dies ist jedoch wünschenswert, um eine Rekuperation durchzuführen, bei der die Antriebsräder 24 die E-Maschine 23 antreiben, so dass die E-Maschine 23 als Generator wirkt. Um dies zu erreichen, sind eine erste Klaue 10 sowie eine zweite Klaue 11 vorhanden. Die erste Klaue 10 wirkt parallel zu dem ersten Freilauf 8. Somit ist der erste Freilauf 8 durch die erste Klaue 10 blockierbar, unabhängig davon, ob der erste Freilauf 8 ohne die erste Klaue 10 überholt werden würde oder blockieren würde. Gleiches gilt für die zweite Klaue 11 und den zweiten Freilauf 9. Durch die zweite Klaue 11 ist der zweite Freilauf 9 blockierbar, unabhängig davon, welchen Zustand der zweite Freilauf aufgrund der vorherrschenden Drehmomentverhältnisse innerhalb der Getriebeanordnung 1 einnehmen würde. Somit lässt sich ein Rekuperationsbetrieb durchführen.

Befindet sich die Getriebeanordnung 1 in dem ersten Gang, das bedeutet, ist die Kupplung 19 geöffnet, so greift der erste Freilauf 8, wenn über die E-Maschine 23 ein Drehmoment auf die Getriebeanordnung 1 aufgebracht wird. Soll in diesem Zustand eine Rekuperation erfolgen, so wird die erste Klaue 10 geschlossen. Dies führt dazu, dass ein Drehmoment von dem Ausgang 7 zu dem Eingang 6 übertragen werden kann, da eine Drehmomentübertragung von dem Planetenträger 5 zu der ersten Stirnradstufe 17 ermöglicht ist. Wäre die erste Klaue 10 nicht vorhanden, wäre eine solche Drehmomentübertragung nicht möglich, da in diesem Fall der Freilauf 8 überholen würde.

Ist der zweite Gang eingelegt, das bedeutet, ist die Kupplung 19 geschlossen, so erfolgt eine Drehmomentübertragung von der zweiten Stirnradstufe über den zweiten Freilauf auf das Ritzel 21. Soll auch hier eine Rekuperation durchgeführt werden, so wird die zweite Klaue 11 geschlossen, wodurch eine Drehmomentübertragung von Ritzel 21 zu der zweiten Stirnradstufe 18 ermöglicht ist. Ohne die zweite Klaue 11 wäre dies nicht möglich, da ansonsten der zweite Freilauf 9 überholen würde.

Durch die Getriebeanordnung 1 ist somit ein einfaches und aufwandsarmes Wechseln eines Ganges ermöglicht. Gleichzeitig kann aktiv gesteuert werden, ob eine Rekuperation durchgeführt werden soll oder nicht. Ist eine Rekuperation nicht gewünscht, so ist auch keinerlei Drehmomentübertragung von dem Ausgang 7 zu dem Eingang 6 der Getriebeanordnung 1 ermöglicht, indem die erste Klaue 10 und die zweite Klaue 11 nicht geschlossen werden.

Figur 2 zeigt schematisch das Planetengetriebe 2 der Getriebeanordnung 1. Dabei ist vorgesehen, dass es sich um einen Plus-Planetensatz handelt, was bedeutet, dass mehrere ineinandergreifende Planetenräder 14, 15 vorhanden sind. Insbesondere ist eine Vielzahl von ersten Planetenrädern 14 und zweiten Planetenrädern 15 vorhanden. Die ersten Planetenräder 14 kämmen mit dem Sonnenrad 4, während die zweiten Planetenräder 15 mit dem Hohlrad 3 kämmen. Außerdem kämmt jeweils ein erstes Planetenrad 14 mit jeweils einem zweiten Planetenrad 15. Somit ist eine hohe Übersetzung erreichbar, wodurch eine hohe Spreizung zwischen den Gängen der Getriebeanordnung 1 erreicht werden kann.

Der Planetenträger 5 dient zum Tragen sowohl der ersten Planetenräder 14 als auch der zweiten Planetenräder 15. Die ersten Planetenräder 14 und die zweiten Planetenräder 15 können gleiche oder unterschiedliche Durchmesser und/oder Zähnezahlen aufweisen.

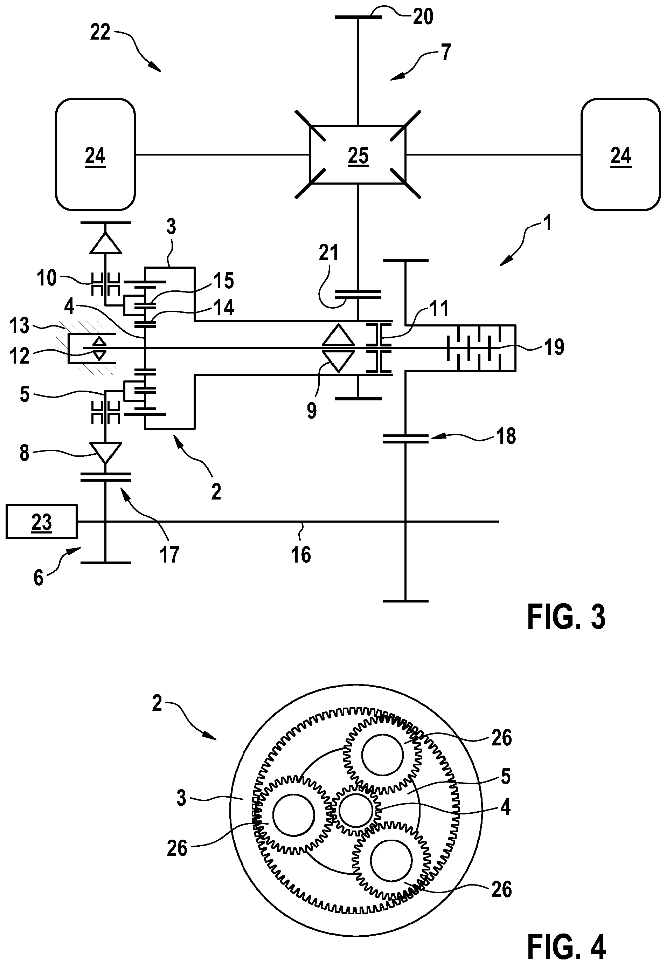

Figur 3 zeigt eine Antriebsvorrichtung 22 mit einer Getriebeanordnung 1 gemäß einem zweiten Ausführungsbeispiel der Erfindung. Dabei ist ein Unterschied lediglich in der Getriebeanordnung 1 selbst zu sehen. Der einzige Unterschied des zweiten Ausführungsbeispiels zu dem ersten Ausführungsbeispiel ist die Anordnung der Kupplung 19. So ist im ersten Ausführungsbeispiel, wie in Figur 1 gezeigt, die Kupplung 19 zwischen der Eingangswelle 16 und der zweiten Stirnradstufe 18 angeordnet. In diesem zweiten Ausführungsbeispiel, wie in Figur 3 gezeigt, ist die Kupplung 19 zwischen der zweiten Stirnradstufe 18 und dem Sonnenrad 4 angeordnet.

Unabhängig von der unterschiedlichen Anordnung ist die Funktion der Kupplung 19 im zweiten Ausführungsbeispiel identisch zu der Funktion der Kupplung 19 im ersten Ausführungsbeispiel. Insbesondere lässt sich durch die Kupplung 19 weiterhin einstellen, ob eine Drehmomentübertragung und/oder Drehzahlübertragung von der Eingangswelle 16 über die zweite Stirnradstufe 18 auf das Sonnenrad 4 erfolgen soll. Somit ist eine Funktionsweise der Getriebeanordnung 1 gemäß dem zweiten Ausführungsbeispiel identisch zu der Funktionsweise der Getriebeanordnung 1 gemäß dem ersten Ausführungsbeispiel wie zuvor beschrieben.

Figur 4 zeigt schematisch ein alternatives Planetengetriebe 2, das in der Getriebeanordnung 1 gemäß dem ersten Ausführungsbeispiel oder dem zweiten Ausführungsbeispiel verwendet werden kann. Alternativ zu den ersten Planetenrädern 14 und zweiten Planetenrädern 15 ist lediglich ein einziger Satz von Planetenrädern 26 vorhanden. Die Planetenräder 26 kämmen sowohl mit dem Sonnenrad 4 als auch mit dem Hohlrad 3. Somit ist eine geringere Übersetzung realisiert. Die in den Figuren 1 und 3 gezeigten Planetengetriebe 2 lassen sich durch das in Figur 4 gezeigte Planetengetriebe 2 ersetzen.

Vorteilhafterweise wird die Antriebsvorrichtung 22 im Fahrzeugbereich, insbesondere im PKW-Bereich und/oder im LKW-Bereich eingesetzt. Durch die Getriebeanordnung 1 ist ein Schalten in einen anderen Gang bei Last ermöglicht. Dies bedeutet, dass ein zugkraftunterbrechungsfreier Betrieb ermöglicht ist, da zum Wechseln des Gangs keine Trennung der E-Maschine 23 von der Getriebeanordnung 1 erfolgen muss.

## Patentansprüche

1. Getriebeanordnung (1) umfassend ein Planetengetriebe (2), das zwischen einem Eingang (6) und einem Ausgang (7) der Getriebeanordnung (1) vorhanden ist,
- wobei ein Hohlrad (3) des Planetengetriebes (2) mit dem Ausgang (7) gekoppelt ist und ein Planetenträger (5) mit dem Eingang (6) koppelbar ist, wobei die Getriebeanordnung (1) einen ersten Freilauf (8) umfasst. **dadurch gekennzeichnet, dass**
- ein Sonnenrad (4) und der Planetenträger (5) des Planetengetriebes (2) wahlweise mit dem Eingang (6) koppelbar sind, und
- wobei die Getriebeanordnung (1) einen zweiten Freilauf (9) umfasst, wobei der erste Freilauf (8) zwischen Eingang (6) und
Planetenträger (5) und der zweite Freilauf (9) zwischen Sonnenrad (4) und Hohlrad (3) angeordnet ist,
und wobei in einem ersten Gang der Getriebeanordnung, in dem ein über den Planetenträger (5) eingebrachtes Drehmoment gewandelt und über das Hohlrad (3) ausgegeben wird, das Sonnenrad (4) über eine Kupplung und/oder einen dritten Freilauf (12) drehfest mit einem Gehäuse (13) der Getriebeanordnung verbindbar ist.

2. Getriebeanordnung (1) nach Anspruch 1, **gekennzeichnet durch** eine erste Klaue (10), die parallel zu dem ersten Freilauf (8) wirkt, um Eingang (6) und Planetenträger (5) drehfest zu verbinden und/oder eine zweite Klaue (11), die parallel zu dem zweiten Freilauf (9) wirkt, um Sonnenrad (4) und Hohlrad (3) drehfest zu verbinden.

3. Getriebeanordnung (1) nach einem der vorhergehenden Ansprüche, **dadurch gekennzeichnet, dass** der Planetenträger (5) eine Vielzahl von ersten Planetenrädern (14) und zweiten Planetenrädern (15) aufweist, wobei die ersten Planetenräder (14) in Eingriff mit dem Sonnenrad (4) und die zweiten Planetenräder (15) in Eingriff mit dem Hohlrad (3) stehen, und wobei jeweils ein erstes Planetenrad (14) in Eingriff mit einem zweiten Planetenrad (15) steht.

4. Getriebeanordnung (1) nach einem der vorhergehenden Ansprüche, **gekennzeichnet durch** eine Eingangswelle (16), die mit dem Eingang (6) und über den ersten Freilauf (8) dem Planetenträger (5) gekoppelt ist und die wahlweise mit dem Sonnenrad (4) koppelbar ist.

5. Getriebeanordnung (1) nach Anspruch 4, **gekennzeichnet durch** eine erste Stirnradstufe (17) zum Koppeln der Eingangswelle (16) mit dem Planetenrad (5) und eine zweite Stirnradstufe (18) zum Koppeln von Eingangswelle (16) und Sonnenrad (4), wobei eine Drehmomentübertragung und/oder Drehzahlübertragung über die zweite Stirnradstufe (18) wahlweise aktivierbar und deaktivierbar ist.

6. Getriebeanordnung (1) nach Anspruch 5, **dadurch gekennzeichnet, dass** zwischen Eingangswelle (16) und zweiter Stirnradstufe (18) und/oder zwischen zweiter Stirnradstufe (18) und Sonnenrad (4) eine Kupplung (19), insbesondere eine Lamellenkupplung, angeordnet ist.

7. Getriebeanordnung (1) nach einem der vorhergehenden Ansprüche, **gekennzeichnet durch** ein Ausgangsrad (20), das mit einem mit dem Hohlrad (3) drehfest verbundenen Ritzel (21) kämmt, wobei das Ausgangsrad (20) den Ausgang (7) darstellt.

8. Antriebsvorrichtung (22) eines Fahrzeugs, umfassend eine E-Maschine (23) und eine Getriebeanordnung (1) nach einem der vorhergehenden Ansprüche, wobei die E-Maschine (23) mit dem Eingang (6) gekoppelt ist.

9. Antriebsvorrichtung (22) nach Anspruch 8, **gekennzeichnet durch** ein mit Antriebsrädern (24) des Fahrzeugs verbundenes Differentialgetriebe (25), wobei das Differentialgetriebe (25) mit dem Ausgang (7) gekoppelt ist.

## Claims

1. Gearbox assembly (1) comprising a planetary gearbox (2) which is present between an input (6) and an output (7) of the gearbox assembly (1),
- wherein a ring gear (3) of the planetary gearbox (2) is coupled to the output (7), and a planetary carrier (5) is able to be coupled to the input (6),
- wherein the gearbox assembly (1) comprises a first freewheeling assembly (8),
**characterized in that**
- a sun gear (4) and the planetary carrier (5) of the planetary gearbox (2) are able to be selectively coupled to the input (6), and
- wherein the gearbox assembly (1) comprises a second freewheeling assembly (9), where the first freewheeling assembly (8) is disposed between the input (6) and the planetary carrier (5), and the second freewheeling assembly (9) is disposed between the sun gear (4) and the ring gear (3), and
- wherein in a first gear of the gearbox assembly in which a torque introduced by way of the planetary carrier (5) is converted and delivered by way of the ring gear (3), the sun gear (4) by way of a clutch and/or a third freewheeling assembly (12) is able to be connected in a rotationally fixed manner to a housing (13) of the gearbox assembly.

2. Gearbox assembly according to Claim 1, **characterized by** a first claw (10) which acts in parallel with the first freewheeling assembly (8) so as to connect the input (6) and the planetary carrier (5) in a rotationally fixed manner, and/or a second claw (11) which acts in parallel with the second freewheeling assembly (9) so as to connect the sun gear (4) and the ring gear (3) in a rotationally fixed manner.

3. Gearbox assembly (1) according to one of the preceding claims, **characterized in that** the planetary carrier (5) has a multiplicity of first planetary gears (14) and second planetary gears (15), wherein the first planetary gears (14) engage with the sun gear (4), and the second planetary gears (15) engage with the ring gear (3), and wherein one first planetary gear (14) engages in each case with a second planetary gear (15).

4. Gearbox assembly (1) according to one of the preceding claims, **characterized by** an input shaft (16) which is coupled to the input (6) and, by way of the first freewheeling assembly (8), to the planetary carrier (5), and which is able to be selectively coupled to the sun gear (4).

5. Gearbox assembly (1) according to Claim 4, **characterized by** a first spur gear stage (17) for coupling the input shaft (16) to the planetary gear (5), and a second spur gear stage (18) for coupling the input shaft (16) and the sun gear (4), wherein a transmission of torque and/or a transmission of rotating speed are/is able to be selectively activated or deactivated by way of the second spur gear stage (18).

6. Gearbox assembly (1) according to Claim 5, **characterized in that** a clutch (19), in particular a multiple disc clutch, is disposed between the input shaft (16) and the second spur gear stage (18) and/or between the second spur gear stage (18) and the sun gear (4).

7. Gearbox assembly (1) according to one of the preceding claims, **characterized by** an output gear (20) which meshes with a sprocket (21) that is connected in a rotationally fixed manner to the ring gear (3), wherein the output gear (20) represents the output (7).

8. Drive device (22) of a vehicle, comprising an electric machine (23) and a gearbox assembly (1) according to one of the preceding claims, wherein the electric machine (23) is coupled to the input (6) .

9. Drive device (22) according to Claim 8, **characterized by** a differential gearbox (25) which is connected to drive wheels (24) of the vehicle, wherein the differential gearbox (25) is coupled to the output (7).

## Revendications

1. Dispositif de transmission (1), comprenant un engrenage planétaire (2) qui est présent entre une entrée (6) et une sortie (7) du dispositif de transmission (1),
- dans lequel une couronne (3) de l'engrenage planétaire (2) est accouplée à la sortie (7), et un porte-satellites (5) peut être accouplé à l'entrée (6), le dispositif de transmission (1) comprenant une première roue libre (8),
**caractérisé en ce que**
- une roue solaire (4) et le porte-satellites (5) de l'engrenage planétaire (2) peuvent être accouplés au choix à l'entrée (6), et
- le dispositif de transmission (1) comprenant une deuxième roue libre (9), la première roue libre (8) étant disposée entre l'entrée (6) et le porte-satellites (5), et la deuxième roue libre (9) étant disposée entre la roue solaire (4) et la couronne (3),
et dans lequel, dans un premier rapport du dispositif de transmission, dans lequel un couple introduit par l'intermédiaire du porte-satellites (5) est converti est sorti par l'intermédiaire de la couronne (3), la roue solaire (4) peut être reliée de manière solidaire en rotation par l'intermédiaire d'un embrayage et/ou d'une troisième roue libre (12) à un carter (13) du dispositif de transmission.

2. Dispositif de transmission (1) selon la revendication 1, **caractérisé par** une première griffe (10) qui agit en parallèle à la première roue libre (8) afin de relier de manière solidaire en rotation l'entrée (6) et le porte-satellites (5), et/ou par une deuxième griffe (11) qui agit en parallèle à la deuxième roue libre (9) afin de relier de manière solidaire en rotation la roue solaire (4) et la couronne (3).

3. Dispositif de transmission (1) selon l'une quelconque des revendications précédentes, **caractérisé en ce que** le porte-satellites (5) présente une pluralité de premières roues planétaires (14) et de deuxièmes roues planétaires (15), les premières roues planétaires (14) étant en prise avec la roue solaire (4) et les deuxièmes roues planétaires (15) étant en prise avec la couronne (3), et respectivement une première roue planétaire (14) étant en prise avec une deuxième roue planétaire (15).

4. Dispositif de transmission (1) selon l'une quelconque des revendications précédentes, **caractérisé par** un arbre d'entrée (16) qui est accouplé à l'entrée (6) et par l'intermédiaire de la première roue libre (8) avec le porte-satellites (5) et qui peut être accouplé au choix à la roue solaire (4).

5. Dispositif de transmission (1) selon la revendication 4, **caractérisé par** un premier étage à roues droites (17) pour accoupler l'arbre d'entrée (16) à la roue planétaire (5), et par un deuxième étage à roues droites (18) pour accoupler l'arbre d'entrée (16) et la roue solaire (4), un dispositif de transmission de couple et/ou un dispositif de transmission de vitesse de rotation pouvant être activés et désactivés au choix par l'intermédiaire du deuxième étage à roues droites (18).

6. Dispositif de transmission (1) selon la revendication 5, **caractérisé en ce qu'**un embrayage (19), en particulier un embrayage à disques multiples, est disposé entre l'arbre d'entrée (16) et le deuxième étage à roues droites (18) et/ou entre le deuxième étage à roues droites (18) et la roue solaire (4).

7. Dispositif de transmission (1) selon l'une quelconque des revendications précédentes, **caractérisé par** une roue de sortie (20) qui s'engrène avec un pignon (21) relié de manière solidaire en rotation à la couronne (3), la roue de sortie (20) représentant la sortie (7).

8. Dispositif d'entraînement (22) d'un véhicule, comprenant une machine électrique (23) et un dispositif de transmission (1) selon l'une quelconque des revendications précédentes, la machine électrique (23) étant accouplée à l'entrée (6).

9. Dispositif d'entraînement (22) selon la revendication 8, **caractérisé par** un engrenage différentiel (25) relié aux roues motrices (24) du véhicule, l'engrenage différentiel (25) étant accouplé à la sortie (7).
